# EUROPÄISCHE PATENTANMELDUNG

(11) **EP 4 538 581 A1**
(43) Veröffentlichungstag der Anmeldung: **16.04.2025**
(21) Anmeldenummer: 24193061.9
(22) Anmeldetag: 06.08.2024
(51) Int. Cl.: F16T 1/00, G05B 23/02

(54) **VERFAHREN ZUM BETRIEB EINES KONDENSATABLEITERS SOWIE KONDENSATABLEITER**

(30) Priorität: 11.10.2023 DE 102023127822
(71) Anmelder: IFS Industriefabrik Schneider GmbH, 06780 Zörbig (DE)
(72) Erfinder: Wedekind, Horst, 30826 Garbsen (DE); Ramm, Michael, 30827 Garbsen (DE); Schneider, Christian, 06792 Sandersdorf-Brehna (DE)
(74) Vertreter: Scheffler, Jörg

(57) **Zusammenfassung**

Die Erfindung betrifft ein Verfahren zum Betrieb eines Kondensatableiters (1), wobei ein Füllstand eines Kondensats (2), welches in einem Kondensatreservoir (3) des Kondensatableiters (1) angesammelt ist und/oder sich ansammelt überwacht und das Kondensat (2) bei Erreichen eines über einen Messaufnehmer (4) bestimmten Maximalfüllstands (5) des Kondensats (2) im Kondensatreservoir (3) in einem Leervorgang des Kondensatreservoirs (3) respektive in einem Zuführvorgang einem Ablauf (7) des Kondensatableiters (1) zugeführt wird. Dabei wird während eines jeweiligen Leervorgangs stets eine gleiche Menge an Kondensat (2) zwischen dem Maximalfüllstand (5) und einem Minimalfüllstand (6) des Kondensats (2) im Kondensatreservoir (3) abgeführt. Weiterhin betrifft die Erfindung einen Kondensatableiter (1) zur Durchführung des Verfahrens.

## Beschreibung

Die Erfindung betrifft ein Verfahren zum Betrieb eines Kondensatableiters, wobei ein Füllstand eines Kondensats, welches in einem Kondensatreservoir des Kondensatableiters angesammelt ist und/oder sich ansammelt überwacht und das Kondensat bei Erreichen eines über einen Messaufnehmer bestimmten Maximalfüllstands des Kondensats im Kondensatreservoir in einem Leervorgang des Kondensatreservoirs respektive in einem Zuführvorgang einem Ablauf des Kondensatableiters zugeführt wird. Weiterhin betrifft die Erfindung einen Kondensatableiter zur Durchführung des Verfahrens, wobei der Kondensatableiter ein Kondensatreservoir zur Aufnahme von Kondensat und einen Messaufnehmer zum Bestimmen eines Maximalfüllstands des Kondensats im Kondensatreservoir aufweist.

Kondensatableiter werden regemäßig eingesetzt, um das durch, insbesondere in der chemischen und/oder energetischen Industrie eingesetzte, Dampfverbraucher respektive Kondensaterzeuger entstehende Kondensat abzuleiten. Neben der Ausführung in dampfführenden Anlagen werden Kondensatableiter auch im Bereich druckluftführender Anlagen eingesetzt.

Als ein einfaches Beispiel für die Entstehung eines Kondensats kann die Inbetriebnahme einer dampfführenden Anlage dienen, wobei sich zu Beginn an den noch kühlen Leitungen, durch welche heißer Dampf geleitet wird, eine relativ große Menge an Kondensat bildet.

Während des Normalbetriebs einer derartigen dampfführenden Anlage nimmt die Menge an entstehendem Kondensat zwar ab, jedoch entsteht auch während des normalen Betriebszustands solcher Anlagen fortwährend eine Mindestmenge an Kondensat. Dies wird durch stets vorhandene Wärmeverluste bedingt, die z. B. auch durch eine Prozessführung mittels des Dampfs entstehen und zu einer Absenkung der Dampftemperatur unterhalb der Sattdampf-Temperatur führen. Das Abführen des entstehenden Kondensats ist jedoch elementar, insbesondere um Schäden durch Dampfschläge zu verhindern und um Kondensat vom Prozess fernzuhalten.

Aus dem Stand der Technik sind dabei bereits Kondensatableiter bekannt, bei denen eine Füllstandsüberwachung des sich im Kondensatableiter befindenden Kondensats über insbesondere elektronische Füllstandssensoren verwirklicht wird.

So beschreibt die DE 196 42 704 A1 einen Kondensatableiter für einen ölgeschmierten Drucklufterzeuger, wobei die Druckschrift von dem zusätzlichen Problem ausgeht, dass bei ölgeschmierten Drucklufterzeugern wie Kompressoren der Ölanteil im Kondensat so hoch ist, dass eine zusätzliche Kondensat-Trennung von Wasser und Öl erforderlich ist. Hierfür weist der Kondensatableiter eine Vorkammer, eine über ein elektrisches Kondensateinlass-Magnetventil mit der Vorkammer verbundene Hauptkammer sowie einen in der Hauptkammer angeordneten und die Hauptkammer teils durchlaufenden Füllstandssensor und einen Ölabflussstutzen auf, welcher wiederum über ein elektrisches Ölablass-Magnetventil mit einem Ölbehälter verbunden ist. Weiterhin ist die Hauptkammer über ein elektrisches Kondensatablass-Magnetventil über weitere Filter mit einem Ablauf verbunden und weist darüber hinaus ein Druckentlastungs-Magnetventil auf. Erzeugtes Kondensat tritt durch den Eintrittsstutzen in die Vorkammer ein. Anschließend fließt es über das geöffnete Kondensateinlass-Magnetventil in die Hauptkammer. Während dieser Phase bleiben das Druckentlastungs-, das Ölablass- sowie das Kondensatablass-Magnetventil geschlossen. Sobald die Hauptkammer bis zu einem der Oberkante des Ölabflussstutzens entsprechenden oberen Füllstand gefüllt ist, gelangt das auf der Wasseroberfläche schwimmende Öl in den Ölabflussstutzen. Der Füllstandssensor signalisiert sodann den Bedarf zum Ablassen des Kondensats. Infolgedessen schließt das Kondensateinlass-Magnetventil. Nach einer Verzögerung öffnet sich das Druckentlastungs-Magnetventil, wodurch der Druck in der Hauptkammer abgebaut wird. Anschließend öffnen zeitverzögert das Ölablass-Magnetventil und das Kondensatablass-Magnetventil. Währenddessen füllt sich der Ölbehälter. Das Kondensat wird zudem durch das Kondensatablass-Magnetventil ohne Druck über die Filter in den Ablauf abgeleitet. Der Pegel des Kondensats in der Hauptkammer sinkt dabei auf einen unteren Zustand. Ist dieser erreicht, gibt der Füllstandssensor das Signal zum Schließen des Druckentlastungs-Magnetventils, des Ölablass-Magnetventils sowie des Kondensatablass-Magnetventils. Nach deren Schließen öffnet das Kondensateinlass-Magnetventil nach einer Verzögerung erneut und weiteres Kondensat kann in die Hauptkammer einströmen.

Neben den vorstehend genannten flüssigen Ölverschmutzungen können in dem Kondensat auch Feststoffverschmutzungen vorliegen, welche die Funktion eines Kondensatableiters bis hin zu einem Defekt beeinträchtigen können. Solche Feststoffverschmutzungen können vor allem verschiedene Arten von Polymeren umfassen, darunter beispielsweise Kunststoffe wie Thermoplaste und Elastomere. Ferner können auch Verschmutzungen durch Schmierstoffe wie Fette und/oder korrodierte Partikel oder Bestandteile einer Anlage oder des Kondensatableiters selbst vorliegen.

So sind aus dem Stand der Technik bereits Lösungsansätze bekannt, die Funktion von Kondensatableitern zu überwachen.

Hierzu ist der DE 10 2011 053 411 A1 ein Kondensatableiter für Druckluftanlagen mit einer Störungsüberwachung zu entnehmen, welcher über ein steuerbares Ablassventil mit einem, zwischen einer geschlossenen und einer geöffneten Position bewegbaren, Ventilelement verfügt. In der geöffneten Position leitet das Ventilelement druckbeaufschlagtes Kondensat aus der Druckluftanlage über einen Ablassbereich ab, während es in der geschlossenen Position den Druck in der Druckluftanlage aufrechterhält und Kondensat in einem Kondensatsammelbereich aufgenommen wird. Zusätzlich ist eine Detektionseinrichtung zur Detektion einer Ablassströmung von Druckluft sowie Kondensat im Ablassbereich vorhanden. Ein Verfahren zur Detektion einer Störung umfasst dabei das Initiieren des Schließvorgangs durch eine Steuerung und eine anschließende Überwachung einer möglichen Ablassströmung, um sicherzustellen, dass die geschlossene Position erreicht und beibehalten wird. Dieser Überwachungsschritt kann kontinuierlich während des Versuchs, die geschlossene Position aufrechtzuerhalten, erfolgen. So soll ein unvorteilhafter Verlust von Druckluft im System möglichst frühzeitig detektiert werden. Zur Detektion der Ablassströmung wird ein Sensor, insbesondere ein Temperatursensor im Anlassbereich vorgeschlagen. So wird nachteilig jedoch wiederum ein Bauelement in den Kondensatableiter eingebracht, welches wiederum selbst eine Fehleranfälligkeit aufweist.

Die DE 24 14 671 A1 beschreibt darüber hinaus einen Kondensatableiter für Dampfverbraucher, wobei die Funktion des Dampfverbrauchers durch eine Überwachung des Kondensatableiters verbessert werden soll. Dies wird dadurch erreicht, dass dem Kondensatableiter eine Kontrollvorrichtung zugeordnet ist, die die Blockade des Kondensatableiters beim Defektwerden anzeigt. Zweckmäßigerweise wird diese Kontrollvorrichtung unmittelbar dem Kondensatableiter zugeordnet, jedoch ist es auch möglich, diese Kontrollvorrichtung der Zuleitung für diesen Ableiter zuzuordnen. Die Kontrollvorrichtung besteht aus zwei Schellen, die in einem bestimmten Abstand entlang der Zuleitung des Kondensatableiters angebracht sind. Jede dieser Schellen ist mit einer Temperaturmessvorrichtung verknüpft. Die gemessenen Temperaturwerte werden über elektrische Leitungen zu einem Schaltkasten übertragen, wo sie miteinander verglichen werden. Wenn die Temperaturdifferenz einen festgelegten Schwellenwert überschreitet, was auf einen Kondensatrückstau in der Zuleitung hinweisen kann, wird der ermittelte Differenzbetrag über zwei elektrische Kontakte weitergeleitet und an eine akustische Warnvorrichtung übergeben.

Im Gegensatz zum vorstehenden Absatz und vergleichbar zur zuvor beschriebenen DE 10 2011 053 411 A1 besteht auch bei Kondensatableitern für Dampfverbraucher die Problematik, dass aufgrund von Verschmutzungen ein lediglich teilweises Verschließen von Ventilen auftreten kann, sodass ein stetiger Austritt von Dampf aus dem Dampfverbraucher vorliegt. In der Praxis werden bei Kondensatableitern für dampfführende Anlagen zur Bestimmung eines gegebenenfalls unerwünschten Abflusses von Kondensat respektive Dampf oftmals Vortex-Durchflussmesser verwendet, die jedoch eine überaus aufwendige Kalibrierung verlangen.

Darüber hinaus ist anzumerken, dass bezüglich der vorstehenden Ausführungen sowie auch im Allgemeinen der Austritt von Dampf aus dem Dampfverbraucher in Hinblick auf den damit verbundenen Energieverlust eine bedeutende Problematik hinsichtlich der - stetig steigenden - Energiekosten, der Umweltauswirkungen, eines Effizienzverlusts und gegebenenfalls steigenden Wartungskosten sowie Produktionsverlusten darstellt.

Vor diesem Hintergrund liegt der Erfindung somit die Aufgabe zugrunde, das Verfahren der eingangs genannten Art derart auszugestalten, dass eine Menge an über einen Kondensatableiter aus einem Dampfverbraucher austretendem Dampf in zuverlässiger und verfahrenstechnisch einfacher Weise bestimmbar ist. Weiterhin liegt der Erfindung die Aufgabe zugrunde, einen Kondensatableiter zur Durchführung des Verfahrens bereitzustellen.

Diese Aufgabe wird erfindungsgemäß mit einem Verfahren gemäß den Merkmalen des Anspruchs 1 sowie einem Kondensatableiter gemäß den Merkmalen des Anspruchs 10 gelöst. Die weitere Ausgestaltung der Erfindung ist den Unteransprüchen zu entnehmen.

Erfindungsgemäß ist also ein Verfahren zum Betrieb, insbesondere zum Steuern und/oder Regeln eines Kondensatableiters vorgesehen. Hierbei wird im Rahmen des Verfahrens ein Füllstand eines Kondensats, welches in einem Kondensatreservoir des Kondensatableiters zur Aufnahme von Kondensat angesammelt ist und/oder sich ansammelt überwacht. Im Speziellen wird das Kondensat dabei bei Erreichen eines über - wenigstens - einen Messaufnehmer bestimmten Maximalfüllstands des Kondensats im Kondensatreservoir in einem Leervorgang des Kondensatreservoirs respektive in einem Zuführvorgang über zumindest ein, entsprechend stromab des Reservoirs angeordnetes Kondensatablaufventil des Kondensatableiters einem Ablauf des Kondensatableiters zugeführt. In erfindungsgemäßer Ausgestaltung wird während eines jeweiligen Leervorgangs zudem stets eine gleiche Menge, hierbei insbesondere ein gleiches Volumen und/oder eine gleiche Masse an Kondensat zwischen dem - starr definierten - Maximalfüllstand und einem - starr definierten - Minimalfüllstand des Kondensats im Reservoir des Kondensatableiters abgeführt.

Dieses Verfahren zum Betrieb eines Kondensatableiters bietet erhebliche Vorteile, insbesondere in Bezug auf die zuverlässige und verfahrenstechnisch einfache Bestimmung der aus einem Dampfverbraucher austretenden Menge, insbesondere Masse an Dampf, welche entsprechend über den Kondensatableiter abgeführt wird. Durch die kontinuierliche Überwachung des Füllstands im Kondensatreservoir des Kondensatableiters wird gewährleistet, dass die Dampfmenge, die aus dem Dampfverbraucher austritt und sich im Kondensatreservoir als Kondensat ansammelt, genau erfasst werden kann. Sobald der vorab festgelegte Maximalfüllstand erreicht ist, wird der Entleerungsvorgang durchgeführt, wobei eine präzise definierte Menge an Kondensat zwischen dem Maximal- und Minimalfüllstand des Kondensatreservoirs abgeführt wird. Durch die Festlegung eines klaren Maximal- sowie Minimalfüllstands sowie das zwischen diesen Füllständen im Kondensatreservoir vorliegende Volumen wird sichergestellt, dass die gemessenen Werte äußerst präzise sind. Das Verfahren ermöglicht dabei eine einfache und konsistente Erfassung der Menge an Dampf, ohne aufwendige Messinstrumente, komplizierte Berechnungen oder aufwendige Kalibrierungen verwendeter Sensorik. Die erfassten Daten über die aus einem Dampfverbraucher über den Kondensatableiter als Kondensat austretende Menge an Dampf sind zudem leicht verfügbar und können zur Optimierung des Dampfbetriebs und zur Planung von Wartungsarbeiten genutzt werden. Insgesamt trägt das erfindungsgemäße Verfahren erheblich zur Verbesserung der Prozesskontrolle und -effizienz bei, da es eine zuverlässige Methode zur Bestimmung der austretenden Menge an Dampf bietet, was in vielen industriellen Anwendungen von großer Bedeutung ist.

In einer besonders vorteilhaften Weiterbildung der Erfindung wird überdies eine Anzahl an Leervorgängen des Kondensatreservoirs erfasst. So lassen sich überaus effizient Rückschlüsse auf die über eine Betriebsdauer des Kondensatableiters durch den Kondensatableiter abgeführte Menge an Kondensat schließen und somit auch die insgesamt abgeführte Energiemenge kontrollieren. Dies ermöglicht eine genauere Überwachung und Optimierung des Energieverbrauchs eines mit dem Kondensatableiter verbundenen Dampfverbrauchers, was zu erheblichen Kosteneinsparungen und einer verbesserten Energieeffizienz führen kann.

Die Erfindung weiter ausgestaltend ist in einer Ausführungsform vorgesehen, dass die abgeführte Menge das Volumen des Kondensats ist. Dabei wird über dieses Volumen und/oder zumindest eine die Dichte des Kondensats, insbesondere über eine Verteilung des Volumens, beeinflussende und zudem erfasste Temperatur des Kondensats, insbesondere je Leervorgang, eine Masse des abgeführten Kondensats bestimmt. Die präzise Bestimmung der Masse des abgeführten Kondensats, insbesondere unter Berücksichtigung der temperaturabhängigen Dichte des Kondensats, ermöglicht eine äußerst genaue Ermittlung der aus einem Dampfverbraucher abgeleiteten Energiemenge. Durch die Berücksichtigung der Temperaturabhängigkeit der Dichte kann die Messgenauigkeit erheblich verbessert werden, was zu präzisen Daten über die abgeführte Energiemenge führt. Eine Erhöhung der Messgenauigkeit kann hierbei in einem Bereich von 10 % bis 15 %, bevorzugt 12 % bis 13 % liegen und/oder besonders bevorzugt 12 % betragen. In diesem Fall wäre der Messaufnehmer und/oder der weitere Messaufnehmer entsprechend als ein Temperatursensor ausgeführt. Zudem ermöglicht eine genauere Bestimmung der abgeführten Energiemenge eine effizientere Nutzung von Energiequellen, was zu Kosteneinsparungen führt. Eine präzise Energiemengenbestimmung kann weiterhin dazu beitragen, den ökologischen Fußabdruck zu reduzieren, indem unnötiger Energieverbrauch minimiert wird. Ferner können die erfassten Daten über die abgeführte Masse an Kondensat zur kontinuierlichen Überwachung und Optimierung des Systems verwendet werden, um eine reibungslose Funktion und hohe Leistungsfähigkeit sicherzustellen. Insgesamt führt die präzise Bestimmung der abgeführten Masse an Kondensat und somit der Energiemenge zu einer Vielzahl von Vorteilen, die von Kosteneinsparungen bis zur Verbesserung der Umweltbilanz reichen. Dies ist besonders relevant in industriellen Anwendungen, in denen Energie eine wichtige Ressource ist.

Eine überdies gewinnbringende Ausbildung der Erfindung lässt sich darin erkennen, dass eine über den Kondensatableiter abgeführte Masse an Dampf durch eine Summe der in einem jeweiligen Leervorgang abgeführten Masse an Kondensat bestimmt wird. Hierbei entspricht die Masse des abgeführten Dampfs aufgrund der Massenerhaltung der Masse des abgeführten Kondensats. Da die Masse des abgeführten Dampfs der Masse des abgeführten Kondensats entspricht, ist die Berechnung der Dampfmenge einfach und direkt. Dies erleichtert die Datenerfassung und -verarbeitung erheblich. So lässt sich vorteilhaft eine Aussage treffen, wieviel Dampf während des Betriebs des Kondensatableiters über den Kondensatableiter aus einem Dampfverbraucher entnommen wurde und dadurch auf die damit verbundenen Energiekosten rückschließen. Durch die genaue Kenntnis der abgeführten Mengen an Dampf können, insbesondere bei einer zu hohen Abfuhr, Maßnahmen ergriffen werden, den Betrieb des Dampfverbrauchers effizienter zu gestalten, was sich insbesondere in industriellen Prozessen mit hohem Energieverbrauch als gewinnbringend darstellt.

Darüber hinaus ist in einer mit Vorteil behafteten Weiterbildung der Erfindung angedacht, dass das Definieren und/oder Erfassen des Minimalfüllstands des Kondensats im Kondensatreservoir ausgehend vom Maximalfüllstand zeitgesteuert erfolgt. Durch eine solche Weiterbildung ließe sich auf die Verwendung eines Messaufnehmers zur Bestimmung des Minimalfüllstands respektive einen Messaufnehmer mittels dessen der Maximalfüllstand sowie der Minimalfüllstand bestimmbar ist verzichten. Dies vereinfacht den Aufbau des Kondensatableiters respektive ermöglicht die Verwendung eines Messaufnehmers zur Bestimmung des Maximalfüllstands, welcher eine geringe Komplexität und somit eine hohe Zuverlässigkeit aufweist. Der Minimalfüllstand im Kondensatreservoir lässt sich ausgehend vom über einen Messaufnehmer bestimmten respektive gemessenen Maximalfüllstand durch das Abführen eines definierten Volumens an Kondensat aus dem Kondensatreservoir definieren und/oder erfassen. Hierfür wird der Volumenstrom aus dem Kondensatreservoir, insbesondere in Abhängigkeit eines Differenzdrucks zwischen eines im Kondensatreservoir vorherrschenden Reservoirdrucks und eines im Ablauf vorherrschenden Ablaufdrucks und/oder eines in einer mit dem Ablauf verbundenen Kondensathauptleitung vorherrschenden Hauptleitungsdrucks bestimmt. Der Volumenstrom ist zudem abhängig von den Geometrien des Kondensatreservoirs sowie weiterer Komponenten bis zum Ablauf des Kondensatableiters. Über den bekannten Volumenstrom aus dem Kondensatreservoir lässt sich entsprechend über eine definierte Zeit ein bestimmtes Volumen aus dem Kondensatreservoir abführen und derart der Minimalfüllstand einstellen.

In einer anderweitigen, jedoch nicht minder erfolgversprechenden Ausgestaltung der Erfindung erfolgt das Definieren und/oder Erfassen des Minimalfüllstands des Kondensats im Kondensatreservoir über den - wenigstens einen -, insbesondere ersten Messaufnehmer und/oder - wenigstens - einen weiteren, insbesondere zweiten Messaufnehmer des Kondensatableiters. In bevorzugter Ausführung wird zum Definieren und/oder Erfassen des Maximalfüllstands sowie des Minimalfüllstands je - wenigstens - ein Messaufnehmer, besonders bevorzugt je ausschließlich ein Messaufnehmer verwendet, sodass eine kostengünstige und präzise Messung der Füllstände ermöglicht wird. Grundsätzlich können die zur Bestimmung des Maximalfüllstands sowie des Minimalfüllstands verwendeten Messaufnehmer derartige sein, die sich zur Bestimmung eines Füllstands eignen. Die Messaufnehmer können somit z. B. als Ultraschallsensoren, Kapazitive Sensoren, Drucksensoren, Laser-Abstandssensoren, Radarsensoren oder dergleichen ausgeführt sein. Bevorzugt sind die Messaufnehmer jedoch als Temperatursensoren, beispielsweise als ein Platin-Messwiderstand wie ein Pt100-Temperaturfühler ausgeführt. Über diese weiterbildungsgemäße Ausgestaltung wird es überdies vorteilhaft ermöglicht, eine Aussage über den Zustand des Kondensatableiters, insbesondere das Vorliegen etwaiger Störungen zu treffen.

Im Allgemeinen, jedoch bevorzugt bei einer Ausführung des, insbesondere ersten, Messaufnehmers und/oder des weiteren, insbesondere zweiten, Messaufnehmers als Temperatursensoren kann zum Definieren und/oder Erfassen des Maximalfüllstands und/oder des Minimalfüllstands des Kondensats im Kondensatreservoir eine zumindest teilweise Anordnung des, insbesondere ersten, Messaufnehmers und/oder des weiteren, insbesondere zweiten, Messaufnehmers in einem Gesamtvolumen erfolgen, welches das Kondensatreservoir und/oder außerhalb des Kondensatreservoirs liegende und, insbesondere stromauf oder stromab, an das Kondensatreservoir, bevorzugt unmittelbar, angrenzende und/oder mit dem Kondensatreservoir verbundene, wenigstens abschnittsweise umgrenzte Volumen umfasst. Diese Volumen können dabei als wenigstens eine Zuleitung und/oder wenigstens eine Ableitung des Kondensatreservoirs ausgeführt sein, wobei die Zuleitung und/oder Ableitung auch im Strömungsweg der Zu- und/oder Ableitung angeordnete Ventile umfassen kann. Die Zuleitung oder Zuleitungen können hierbei wiederum als eine Kondensatzuleitung und/oder eine Dampfzuleitung, eine Ableitung zudem als eine Kondensatableitung ausgeführt sein.

Das Gesamtvolumen kann darüber hinaus durch stromauf und/oder stromab des Kondensatreservoirs angeordnete Ventile, beispielsweise wenigstens ein Dampfventil, wenigstens ein Kondensatzulaufventil und/oder wenigstens ein Kondensatablaufventil, abgegrenzt sein.

Die Erfindung ausgestaltend ist in einer Weiterbildung jedoch vorgesehen, dass das Definieren und/oder Erfassen des Maximalfüllstands und/oder des Minimalfüllstands des Kondensats im Kondensatreservoir über ein Messen mittels des, insbesondere ersten, Messaufnehmers und/oder mittels des weiteren, insbesondere zweiten, Messaufnehmers in einem außerhalb des Kondensatreservoirs liegenden und, insbesondere stromauf und/oder stromab sowie bevorzugt unmittelbar, an das Kondensatreservoir angrenzenden und/oder mit dem Kondensatreservoir verbundenen, wenigstens abschnittsweise umgrenzten Volumen erfolgt. Ein jeweiliges Volumen kann zudem zumindest ein Ventil, beispielsweise ein Kondensatzulaufventil und/oder ein Dampfventil umfassen. Solche Volumen sind entsprechend als insbesondere wenigstens eine Zuleitung und/oder wenigstens eine Ableitung des Kondensatreservoirs ausgeführt, wobei die Zuleitung oder Zuleitungen folglich als wenigstens eine Kondensatzuleitung und/oder wenigstens eine Dampfzuleitung ausgeführt sein kann respektive können. Eine Ableitung kann zudem als eine Kondensatableitung ausgestaltet sein.

Bei einer zuvor beschriebenen Abgrenzung des Gesamtvolumens durch stromauf und/oder stromab des Kondensatreservoirs angeordnete Ventile, beispielsweise durch wenigstens ein Dampfventil, wenigstens ein Kondensatzulaufventil und/oder wenigstens ein Kondensatablaufventil, würde das Definieren und/oder Erfassen des Maximalfüllstands des Kondensats im Kondensatreservoir bei einem außerhalb des Kondensatreservoirs durchgeführten Messens mittels des, insbesondere ersten, Messaufnehmers in einem Abschnitt des wenigstens abschnittsweise umgrenzten Volumens erfolgen, welcher zwischen dem entsprechenden Ventil, hier insbesondere einem Kondensatzulaufventil und/oder einem Dampfventil, und dem Kondensatreservoir, d. h. stromab des jeweiligen Ventils ausgeführt ist.

In einer vorteilhaften Ausgestaltung erfolgt das Definieren und/oder Erfassen des Maximalfüllstands zudem in zumindest einer, insbesondere stromauf und/oder unmittelbar an das Kondensatreservoir angrenzenden und/oder mit dem Kondensatreservoir verbundenen, Zuleitung des Kondensatreservoirs. Die Zuleitung oder Zuleitungen können, wie zuvor bereits angemerkt, als eine Kondensatzuleitung und/oder eine Dampfzuleitung ausgeführt sein. Ein insbesondere als Temperatursensor ausgeführter Messaufnehmer, über welchen das das Definieren und/oder Erfassen des Maximalfüllstands erfolgt, wäre hierbei entsprechend zumindest teilweise in wenigstens einer der Zuleitungen und/oder bei Abgrenzung des Gesamtvolumens über Ventile in einem Abschnitt der Zuleitung, also insbesondere einer Kondensatzuleitung, einer Dampfzuleitung und/oder einem Abschnitt einer Kondensatzuleitung und/oder einer Dampfzuleitung, angeordnet. Der Abschnitt der jeweiligen Zuleitung wäre dabei zwischen einem Ventil, insbesondere einem Kondesatzulaufventil und/oder einem Dampfventil, und dem Kondensatreservoir ausgeführt.

Der Abschnitt des Volumens kann dabei wiederum als ein Abschnitt einer Zuleitung, insbesondere einer Kondensatzuleitung und/oder einer Dampfzuleitung, oder einer Ableitung, insbesondere einer Kondensatableitung, ausgestaltet sein.

In einer weiteren nicht minder vielversprechenden Weiterbildung der Erfindung erfolgt das Definieren und/oder Erfassen des Maximalfüllstands zudem in einem, insbesondere stromauf des Kondensatreservoirs angeordneten und/oder mit dem Kondensatreservoir verbundenen Kondensatpuffer des Kondensatableiters und/oder einem an den Kondensatpuffer, insbesondere unmittelbar angrenzenden und/oder mit dem Kondensatpuffer verbundenen, wenigstens abschnittsweise umgrenzten Volumen des Kondensatableiters. Der Kondensatpuffer ist dabei stromauf des Kondensatreservoirs angeordnet und kann z. B. als ein Speicher, wie ein Tank, und/oder als eine, beispielswiese als Rohrleitung ausgeführte Leitung, wie eine Zuleitung oder Ableitung, insbesondere eine Kondensatzuleitung oder Kondensatableitung ausgeführt sein.

Die Ausgestaltung eines wenigstens abschnittsweise umgrenzten Volumens kann zudem ebenso als eine Zuleitung oder Ableitung, insbesondere eine Kondensatzuleitung des Kondensatreservoirs und/oder eine Kondensatableitung des Kondensatpuffers erfolgen, wobei ein jeweiliges Volumen zumindest ein Ventil, beispielsweise ein Kondensatzulaufventil umfassen kann. Bei einem Abgrenzen des bereits beschriebenen Gesamtvolumens des Kondensatreservoirs durch Ventile, z. B. durch wenigstens ein Dampfventil, wenigstens ein Kondensatzulaufventil und/oder wenigstens ein Kondensatablaufventil, würde das Definieren und/oder Erfassen des Maximalfüllstands entweder in dem Kondensatpuffer und/oder in einem Abschnitt des an den Kondensatpuffer angrenzenden und/oder mit dem Kondensatpuffer verbundenen, wenigstens abschnittsweise umgrenzten Volumen erfolgen, welches zwischen dem Kondensatpuffer und dem Ventil, d. h. insbesondere stromauf des Ventils, z. B. stromauf eines Kondensatzulaufventils, ausgeführt ist. Der Abschnitt des wenigstens abschnittsweise umgrenzten Volumens kann wiederum als ein Abschnitt einer Zuleitung oder Ableitung, insbesondere als ein Abschnitt einer Kondensatzuleitung des Kondensatreservoirs und/oder als ein Abschnitt einer Kondensatableitung des Kondensatpuffers ausgestaltet sein.

Es ist ferner als gewinnbringend anzusehen, wenn in einer Weiterbildung der Erfindung eine Ist-Dauer für einen Leervorgang erfasst und mit einer Soll-Dauer für den Leervorgang verglichen wird. Durch den Vergleich von Ist- und Soll-Dauer kann der Betrieb des Kondensatableiters optimiert werden. Wenn die Ist-Dauer die Soll-Dauer übersteigt, kann dies auf ineffiziente Prozesse oder Störungen hinweisen, die behoben werden müssen. Abweichungen zwischen Ist- und Soll-Dauer können hierbei frühzeitig auf Probleme oder Anomalien hinweisen. Dies ermöglicht eine rechtzeitige Fehlerdiagnose und -behebung, was die Anlagenverfügbarkeit des Kondensatableiters sowie eines mit dem Kondensatableiters verbundenen Dampfverbrauchers erhöht. Die genaue Überwachung der Dauer des Leervorgangs trägt darüber hinaus zur Reduzierung von Energie- und Ressourcenverschwendung bei. Dies führt zu Kosteneinsparungen und einer verbesserten Energieeffizienz. Der Ist-Soll-Vergleich hilft zudem dabei, die Prozesskontrolle zu verbessern und sicherzustellen, dass der Kondensatableiter in Übereinstimmung mit den Anforderungen arbeitet. Durch den Vergleich der Ist-Dauer mit der Soll-Dauer kann weiterhin die Planung von Wartungsarbeiten und Inspektionen erleichtert werden, wodurch wiederum die Betriebssicherheit verbessert wird.

Im Allgemeinen jedoch insbesondere in Zusammenhang mit der vorstehend erläuterten Weiterbildung ist in einer Ausführungsform der Erfindung vorgesehen, dass durch eine Abweichung der Ist-Dauer von der Soll-Dauer für einen Leervorgang eine Störung, insbesondere des Ablaufs des Kondensatableiters festgelegt ist. Im Speziellen lässt sich derart eine Störung des Durchflusses durch den Kondensatableiter, hierbei regelmäßig zwischen dem Kondensatreservoir und dem Abfluss des Kondensatableiters bestimmen. Die Störung des Durchflusses kann dabei insbesondere durch Verjüngungen von Leitungsquerschnitten, beispielsweise durch Ablagerungen hervorgerufen sein. Das Vorliegen solcher Ablagerungen, wie Polymere aller Art, darunter beispielsweise Kunststoffe wie Thermoplaste und Elastomere, Schmierstoffe wie Fette und/oder korrodierte Partikel oder Bestandteile, lässt sich somit vorteilhaft ermitteln und eine Wartung des Kondensatableiters einleiten.

In einer das erfindungsgemäße Verfahren weiterbildenden Ausführungsform ist zudem vorgesehen, dass über einen im Ablauf und/oder stromab eines Kondensatablaufventils des Kondensatableiters angeordneten zusätzlichen, insbesondere dritten Messaufnehmer, welcher bevorzugt als ein Temperatursensor, besonders bevorzugt als ein Pt100-Temperaturfühler ausgeführt ist, eine Temperaturmessung durchgeführt wird. Derart ist bei einer Ausführung des, insbesondere ersten Messaufnehmers und/oder des insbesondere zweiten, weiteren Messaufnehmers als ein Temperatursensor, insbesondere als ein Pt100-Temperaturfühler ein Erfassen und/oder Bestimmen einer Differenztemperatur ermöglicht. Unterscheidet sich dabei eine Ist-Differenztemperatur von einer Soll-Differenztemperatur, insbesondere unter- oder überschreitet dabei die Ist-Differenztemperatur die Soll-Differenztemperatur, lässt sich vorteilhaft eine Störung des Kondensatableiters, hier insbesondere eine Leckage, hierbei der Austritt von Dampf aus dem Kondensatableiter und somit dem Dampfverbraucher, beispielsweise aufgrund von Ablagerungen, bestimmen.

In darüber hinaus äußerst effektiver Ausgestaltung der Erfindung wird bei einem im Kondensatreservoir vorherrschenden Reservoirdruck, welcher gleich oder geringer ist, wie ein im Ablauf des Kondensatableiters vorherrschender Ablaufdruck und/oder ein in einer mit dem Ablauf verbundenen Kondensathauptleitung vorherrschender Hauptleitungsdruck, der Reservoidruck, insbesondere vor und/oder während eines Leervorgangs, durch Aufschalten einer über ein Dampfventil mit dem Kondensatreservoir verbundenen Dampfleitung über den Ablaufdruck und/oder den Hauptleitungsdruck erhöht. So lässt sich in einem Leervorgang Kondensat in zuverlässiger Weise aus dem Kondensatreservoir abführen.

Erfindungsgemäß ist weiterhin ein Kondensatableiter zur Durchführung des vorstehend beschriebenen Verfahrens vorgesehen, wobei der Kondensatableiter ein Kondesatreservoir zur Aufnahme von Kondensat und - wenigstens - einen Messaufnehmer zum Bestimmen eines Maximalfüllstands des Kondensats im Kondensatreservoir aufweist. Erfindungsgemäß weist der Kondensatableiter zudem eine Auswerteeinheit auf, welche zur Bestimmung der Anzahl an Leervorgängen des Kondensatreservoirs eingerichtet ist. So wird in vorteilhaft einfacher Weise ein Kondensatableiter bereitgestellt, der es ermöglicht, die Menge, insbesondere das Volumen und/oder die Masse an aus einem Dampfverbraucher austretendem Dampf zuverlässig und unkompliziert zu bestimmen. Insbesondere kann effizient auf die Menge des über die Betriebsdauer des Kondensatableiters abgeführten Kondensats geschlossen werden. Dadurch wird auch die gesamte abgeführte Energiemenge überwacht und gesteuert. Dies ermöglicht eine präzise Überwachung und Optimierung des Energieverbrauchs eines mit dem Kondensatableiter verbundenen Dampfverbrauchers, was wiederum zu erheblichen Kosteneinsparungen und einer verbesserten Energieeffizienz führen kann. Der Kondensatableiter kann hierbei weitere Bestandteile respektive Bauelemente, wie einen Kondensatpuffer, mehrere Zu- und/oder Ableitungen zum Zuführen und/oder Abführen von Dampf und/oder Kondensat zum oder vom Kondensatreservoir und/oder Ventile zum Sperren oder Öffnen der Zu- und/oder Abfuhr des Dampfs und/oder Kondensats, aufweisen.

In überaus vorteilhafter Weiterbildung der Erfindung ist die Auswerteeinheit zur Bestimmung einer Ist-Dauer eines Leervorgangs des Kondensatreservoirs und/oder dem Vergleich der Ist-Dauer mit einer Soll-Dauer des Leervorgangs eingerichtet. Bei Überschreitung der Soll-Dauer kann dies auf ineffiziente Abläufe oder mögliche Störungen hinweisen, die einer Behebung bedürfen. Das Feststellen von Abweichungen zwischen der Ist-Dauer und der Soll-Dauer ermöglicht eine frühzeitige Identifizierung von Problemen oder ungewöhnlichen Vorkommnissen. Dies wiederum ermöglicht eine zeitnahe Fehlerdiagnose und -behebung, was die Verfügbarkeit des Kondensatableiters sowie eines damit verbundenen Dampfverbrauchers erhöht.

Eine besonders nützliche Ausführungsform der Erfindung lässt sich weiterhin darin erkennen, dass die Auswerteeinheit zur Bestimmung der über den Kondensatableiter abgeführten Masse an Dampf eingerichtet ist, indem die Masse an abgeführtem Kondensat bestimmt und über die Anzahl an durchgeführten Leervorgängen aufsummiert wird. Auf diese Weise kann vorteilhaft ermittelt werden, wie viel Dampf während des Betriebs des Kondensatableiters aus einem Dampfverbraucher abgeleitet wurde, wobei dies Rückschlüsse auf die damit verbundenen Energiekosten ermöglicht. Durch das präzise Wissen über die abgeführten Dampfmengen können gezielte Maßnahmen ergriffen werden, insbesondere wenn die Abfuhrrate zu hoch ist, um den Betrieb des Dampfverbrauchers effizienter zu gestalten.

Wie bereits zuvor dargelegt, besteht die Möglichkeit, dass der, insbesondere erste, Messaufnehmer und/oder der weitere, insbesondere zweite, Messaufnehmer zum Definieren und/oder Erfassen des Maximalfüllstands und/oder des Minimalfüllstands zumindest teilweise in einem Gesamtvolumen angeordnet sind, welches das Kondensatreservoir und/oder außerhalb des Kondensatreservoirs liegende und - stromauf oder stromab und/oder unmittelbar - an das Kondensatreservoir angrenzende und/oder mit dem Kondensatreservoir verbundene, wenigstens abschnittsweise umgrenzte Volumen umfasst. Hierbei können diese Volumen auch je zumindest ein Ventil umfassen. Wie ebenfalls zuvor beschrieben, können diese Volumen ferner als wenigstens eine Zuleitung und/oder wenigstens eine Ableitung des Kondensatreservoirs ausgeführt sein, wobei diese Zuleitung respektive Zuleitungen und/oder diese Ableitung respektive Ableitungen auch je zumindest ein Ventil umfassen können. Die Zuleitung oder Zuleitungen können zudem wiederum als eine Kondensatzuleitung und/oder eine Dampfzuleitung, eine Ableitung zudem als eine Kondensatableitung ausgeführt sein. So besteht demnach auch die Möglichkeit einer zumindest teilweisen Anordnung innerhalb des Kondensatzreservoirs selbst.

Darüber hinaus ist eine Weiterbildung der Erfindung jedoch als vorteilhaft anzusehen, bei welcher der, insbesondere erste, Messaufnehmer und/oder der weitere, insbesondere sich von dem ersten Messaufnehmer unterscheidende, zweite, Messaufnehmer zumindest teilweise in einem außerhalb des Kondensatreservoirs liegenden und - stromauf oder stromab - an das Kondensatreservoir - unmittelbar - angrenzenden und/oder mit dem Kondensatreservoir verbundenen, wenigstens abschnittsweise umgrenzten Volumen angeordnet ist. Diese Volumen sind, wie bereits vorstehend erläutert, insbesondere als wenigstens eine Zuleitung und/oder wenigstens eine Ableitung des Kondensatreservoirs ausgeführt, wobei eine jeweilige Zuleitung und/oder eine jeweilige Ableitung auch je zumindest ein Ventil umfassen können. Zudem kann die Zuleitung oder können die Zuleitungen folglich als eine Kondensatzuleitung und/oder eine Dampfzuleitung ausgeführt sein.

Denkbar ist dabei erneut, dass das Gesamtvolumen durch stromauf und/oder stromab des Kondensatreservoirs angeordnete Ventile, beispielsweise wenigstens ein Dampfventil, wenigstens ein Kondensatzulaufventil und/oder wenigstens ein Kondensatablaufventil, abgegrenzt ist, wobei ein Messaufnehmer bei einer Anordnung innerhalb des abgegrenzten Gesamtvolumens und dabei außerhalb des Kondensatreservoirs entsprechend in einem Abschnitt eines Volumens angeordnet wäre, welcher zwischen dem jeweiligen Ventil und dem Kondensatreservoir, d. h. insbesondere stromab des Ventils, ausgeführt ist. Der Abschnitt des Volumens kann somit wiederum als ein Abschnitt einer Zuleitung, insbesondere einer Kondensatzuleitung und/oder einer Dampfzuleitung, oder einer Ableitung, insbesondere einer Kondensatableitung, ausgestaltet sein.

In einer darüber hinaus vorteilhaften Ausgestaltung der Erfindung ist der - insbesondere erste - Messaufnehmer zumindest teilweise in einer - stromauf - des Kondensatreservoirs angeordneten und mit dem Kondensatreservoir verbundenen Kondensatzuleitung angeordnet. Hierdurch lässt sich überraschenderweise ein deutlich verbessertes Definieren und/oder Erfassen des Maximalfüllstands des Kondensatreservoirs durchführen. Die Kondensatzuleitung kann dabei wenigstens ein Ventil, insbesondere ein Kondensatzulaufventil umfassen. Bei einem Abgrenzen des zuvor erläuterten Gesamtvolumens durch Ventile, z. B. durch wenigstens ein Dampfventil, wenigstens ein Kondensatzulaufventil und/oder wenigstens ein Kondensatablaufventil, wäre der Messaufnehmer bevorzugt in einem Abschnitt der an das Kondensatreservoirs angrenzenden Kondensatzuleitung angeordnet, welcher zwischen dem Ventil und dem Kondensatreservoir, d. h. insbesondere stromab des Ventils, hierbei insbesondere stromab des Kondensatzulaufventils, ausgeführt ist.

Eine ebenfalls überaus gewinnbringende Ausgestaltung der Erfindung liegt zudem darin begründet, dass der Messaufnehmer zumindest teilweise in einem Kondensatpuffer des Kondensatableiters und/oder einem an den Kondensatpuffer, insbesondere unmittelbar, angrenzenden und/oder mit dem Kondensatpuffer verbundenen, wenigstens abschnittsweise umgrenzten Volumen des Kondensatableiters, angeordnet ist. Der Kondensatpuffer ist dabei stromauf des Kondensatreservoirs angeordnet und kann z. B. als ein Speicher, wie ein Tank, und/oder als eine, beispielswiese als Rohrleitung ausgeführte Leitung, wie eine Zuleitung oder Ableitung, insbesondere eine Kondensatzuleitung oder Kondensatableitung ausgeführt sein.

Die Ausgestaltung eines wenigstens abschnittsweise umgrenzten Volumens kann hierbei wiederum als eine Zuleitung oder Ableitung, insbesondere eine Kondensatzuleitung oder Kondensatableitung erfolgen, wobei ein jeweiliges Volumen zumindest ein Ventil, beispielsweise ein Kondensatzulaufventil umfassen kann. Bei einem Abgrenzen des zuvor erläuterten Gesamtvolumens des Kondensatreservoirs durch Ventile, z. B. durch wenigstens ein Dampfventil, wenigstens ein Kondensatzulaufventil und/oder wenigstens ein Kondensatablaufventil, wäre ein Messaufnehmer in bevorzugter Weise zumindest teilweise in dem Kondensatpuffer und/oder in einem Abschnitt des an den Kondensatpuffer angrenzenden und/oder mit dem Kondensatpuffer verbundenen, wenigstens abschnittsweise umgrenzten Volumen angeordnet, welches zwischen dem Kondensatpuffer und dem Ventil, d. h. insbesondere stromauf des Ventils, z. B. stromauf eines Kondensatzulaufventils, ausgeführt ist.

In einer zudem vorteilhaften Weiterbildung ist in einem Ablauf und/oder stromab eines Kondensatablaufventils des Kondensatableiters ein als Temperatursensor, insbesondere als ein Pt100-Temperaturfühler ausgebildeter, zusätzlicher, insbesondere dritter Messaufnehmer angeordnet. In einer solchen Weiterbildung, insbesondere wenn der, insbesondere erste oder der, insbesondere zweite weitere Messaufnehmer ebenfalls als Temperatursensor ausgeführt ist, beispielsweise in Form eines Pt100-Temperaturfühlers, ermöglicht dies das Erfassen und Bestimmen einer Temperaturdifferenz. Wenn die gemessene Ist-Temperaturdifferenz von der erwarteten Soll-Temperaturdifferenz abweicht, insbesondere wenn sie die Soll-Temperaturdifferenz unter- oder überschreitet, kann dies auf mögliche Störungen im Kondensatableiter hinweisen. Diese Störungen könnten beispielsweise auf Ablagerungen oder andere Probleme hindeuten.

Die Erfindung lässt verschiedene Ausführungsformen zu. Zur weiteren Verdeutlichung ihres Grundprinzips ist eine davon in der Zeichnung dargestellt und wird nachfolgend beschrieben.

Diese zeigt in
- Fig. 1: eine Anordnung mit einem Kondensatableiter in einer Ausführung mit füllstandsgesteuerter Betriebsart, höherem Ablaufdruck gegenüber dem Reservoirdruck während des Verfahrens und einer Schaltposition der Ventile zum Ansammeln von Kondensat;
- Fig. 2: einen Kondensatableiter in einer Ausführung mit füllstandsgesteuerter Betriebsart, höherem Ablaufdruck gegenüber dem Reservoirdruck während des Verfahrens und einer Schaltposition der Ventile für einen Leervorgang des Kondensatreservoirs;
- Fig. 3: einen Kondensatableiter in einer Ausführung mit zeitgesteuerter Betriebsart, höherem Ablaufdruck gegenüber dem Reservoirdruck während des Verfahrens und einer Schaltposition der Ventile für einen Leervorgang des Kondensatreservoirs;
- Fig. 4: einen Kondensatableiter in einer Ausführung mit füllstandsgesteuerter Betriebsart, geringerem Ablaufdruck gegenüber dem Reservoirdruck während des Verfahrens und einer Schaltposition der Ventile für einen Leervorgang des Kondensatreservoirs;
- Fig. 5: einen Kondensatableiter in einer Ausführung mit zeitgesteuerter Betriebsart, geringerem Ablaufdruck gegenüber dem Reservoirdruck während des Verfahrens und einer Schaltposition der Ventile für einen Leervorgang des Kondensatreservoirs.

Anhand der Figuren soll nunmehr der grundlegende Aufbau sowie die grundlegende Funktionsweise des erfindungsgemäßen Kondensatableiters 1 sowie des erfindungsgemäßen Verfahrens erläutert werden.

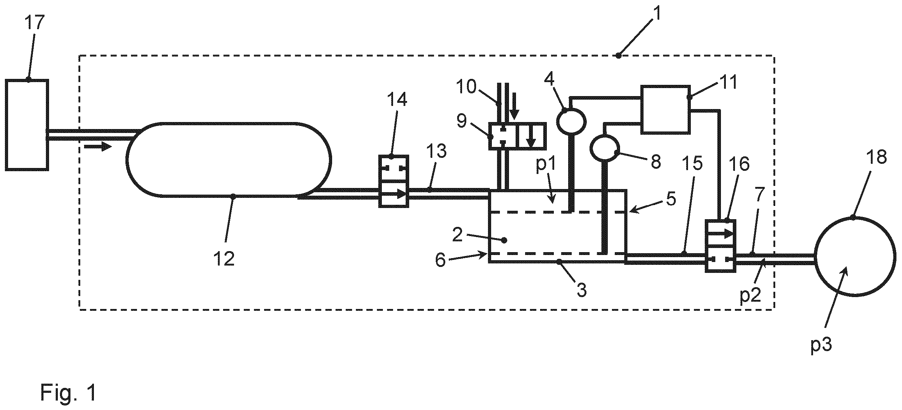

Wie in den Figuren 1 bis 5 aufgezeigt, weist der Kondensatableiter 1 das Kondensatreservoir 3 zum Ansammeln des Kondensats 2 auf. Das Kondensatreservoir 3 ist dabei stromab des Kondensatpuffers 12 des Kondensatableiters 1 angeordnet, wobei Kondensatpuffer 12 und Kondensatreservoir 3 über die Kondensatzuleitung 13 sowie das Kondensatzulaufventil 14 miteinander verbunden sind. Stromab des Kondensatreservoirs 3 ist zudem der Ablauf 7 des Kondensatableisters 1 ausgeführt, welcher über die Kondensatableitung 15 und das Kondensatablaufventil 16 mit dem Kondensatreservoir 3 verbunden ist. Ferner ist das Kondensatreservoir 3 über das Dampfventil 9 mit der Dampfleitung 10 verbunden. Das Dampfventil 9, das Kondensatzulaufventil 14 sowie das Kondensatablaufventil 16 sind dabei als Sperrventile mit zwei Schaltstellungen, einer Offenstellung sowie einer Sperrstellung, ausgeführt. Der Kondensatableiter 1 weist zudem zumindest einen Messaufnehmer 4, 8 auf, über den oder die ein Maximalfüllstand 5 und/oder ein Minimalfüllstand 6 des Kondensats 2 im Kondensatreservoir 3 definierbar und/oder erfassbar ist. Der zumindest eine Messaufnehmer 4, 8 weist hierbei einen Fühler auf, welcher innerhalb des Kondensatreservoirs 3 angeordnet ist.

In der Darstellung der Figur 1 ist der beschriebene Kondensatableiter 1 zudem in einer Anordnung zu erkennen, wobei der Kondensatableiter 1 stromab des Dampfverbrauchers 17 respektive Kondensaterzeugers angeordnet und mit diesem verbunden ist. Zudem ist stromab des Kondensatableiters 1 die mit dem Kondensatableiter 1 verbundene Kondensathauptleitung 18 ausgeführt.

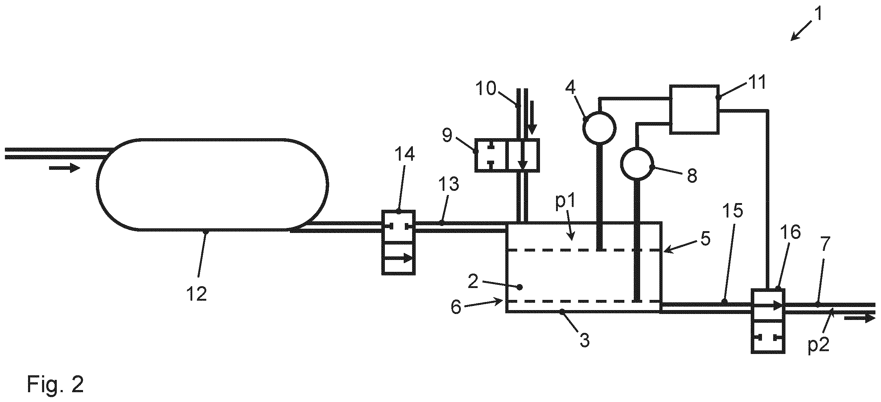

Ausgehend von der Figur 1 lässt sich nun ausführen, dass das im Dampfverbraucher 17 abgeschiedene Kondensat 2 über den Kondensatpuffer 12 in das Kondensatreservoir 3 fließt, wofür sich das Kondensatzulaufventil 14 in seiner Offenstellung befindet. Hierdurch wird es entsprechend ermöglicht, dass sich das Kondensat 2 im Kondensatreservoir 3 ansammelt, wodurch der Füllstand des Kondensats 2 im Kondensatreservoir 3 ansteigt. Während des Ansammelns des Kondensats 2 befindet sich das Kondensatablaufventil 16 in seiner Sperrstellung, sodass kein Kondensat 2 über den Ablauf 7 in die Kondensathauptleitung 18 abgeführt wird. Bei Erreichen des über den ersten Messaufnehmer 4 definierten und/oder erfassten Maximalfüllstands 5 des Kondensats 2 im Kondensatreservoir 3 wird das Kondensat 2 nunmehr jedoch in einem Leervorgang des Kondensatreservoirs 3 dem Ablauf 7 und somit der Kondensathauptleitung 18 zugeführt. Dies erfolgt, indem nach dem Erfassen des Erreichens des Maximalfüllstands 5 das Kondensatzulaufventil 14 in seine Sperrstellung und das Kondensatablaufventil 16 in seine Offenstellung überführt wird, wie dies in der Figur 2 dargestellt ist. Während des Leervorgangs sammelt sich das vom Dampfverbraucher 17 auch weiterhin abgeschiedene Kondensat 2 im Kondensatpuffer 12, da dieses aufgrund des sich in seiner Sperrstellung befindenden Kondensatzulaufventils 14 nicht in das Kondensatreservoirs 3 gelangen kann. Bei Erreichen des Minimalfüllstands 6 wird das Zuführen des Kondensats 2 zum Ablauf 7 und damit zur Kondensathauptleitung 18 wiederum dadurch beendet, dass das Kondensatablaufventil 16 in dessen Sperrstellung überführt wird, wodurch der Leervorgang des Kondensatreservoirs 3 beendet wird. Das Kondensatzulaufventil 14 wird zudem in dessen Offenstellung verbracht, sodass das Ansammeln von Kondensat 2 im Kondensatreservoir 3 erneut erfolgt.

Die Figuren 2 bis 4 zeigen den Konsatableiter 1 dabei jeweils während eines Leervorgangs, sodass das Kondensatzulaufventil 14 jeweils in seiner Sperrstellung und das Kondensatablaufventil 16 in seiner Offenstellung vorliegt.

Ferner ist sodann auszuführen, dass in den Ausführungen der Figuren 1 bis 3 im Kondensatreservoir 3 des Kondensatableiters 1 vor dem Leervorgang ein Reservoirdruck p1 vorherrscht, welcher geringer ist als der im Ablauf 7 des Kondensatableiters 1 vorherrschende Ablaufdruck p2 und somit auch geringer ist als der in der Kondensathauptleitung 18 vorherrschende Hauptleitungsdruck p3. Somit wäre ein Zuführen des sich im Kondensatreservoir 3 befindenden Kondensats 2 zum Ablauf 7 und/oder der Kondensathauptleitung 18 nicht möglich. Aus diesem Grund wird beim Erreichen oder unmittelbar nach dem Erreichen des Maximalfüllstands 5 und damit unmittelbar vor und/oder während des folgenden Leervorgangs des Kondensatreservoirs 3 der Reservoirdruck p1 durch Aufschalten der über das Dampfventil 9 mit dem Kondensatreservoir 3 verbundenen Dampfleitung 10 über den Ablaufdruck p2 und damit auch den Hauptleitungsdruck p3 erhöht.

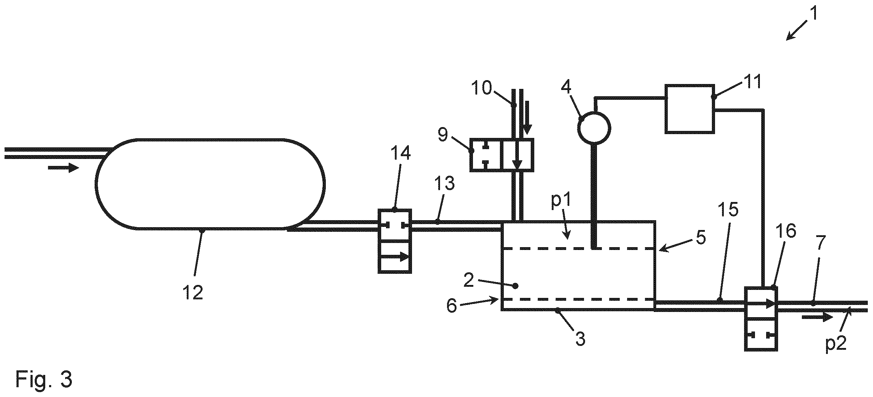

Das Definieren und/oder Erfassen des Minimalfüllstands 6 unterscheidet sich bei der Ausführung der Figuren 1 und 2 jedoch gegenüber der Ausführung der Figur 3. Bei der Ausführung der Figuren 1 und 2 weist der Kondensatableiter 1 zwei Messaufnehmer 4, 8 auf, wobei der Maximalfüllstand 5 über den ersten Messaufnehmer 4 und der Minimalfüllstand 6 über den weiteren, zweiten Messaufnehmer 8 definiert und/oder erfasst wird.

Im Gegensatz dazu ist in der Ausführung des Kondensatableiters 1 der Figur 3 lediglich ein Messaufnehmer 4 ausgeführt, über welchen der Maximalfüllstand 5 des Kondensats 2 im Kondensatreservoir 3 definiert und/oder erfasst wird. Das Definieren und/oder Erfassen des Minimalfüllstands 6 des Kondensats 2 im Kondensatreservoir 3 erfolgt hingegen ausgehend vom Maximalfüllstand 5 zeitgesteuert, was eine überaus zuverlässige und kostengünstige Ausgestaltung des Kondensatableiters 1 bedingt.

Eine Ausführung mit zwei Messaufnehmern 4, 8, wie in der Ausführung des Kondensatableiters 1 der Figuren 1 und 2 bietet jedoch den Vorteil, dass eine Störung des Kondensatableiters 1, insbesondere eine Störung des Durchflusses durch den Kondensatableiter 1, im Speziellen zum Ablauf 7 des Kondensatableiters 1 hin bestimmt werden kann. Hierfür wird während eines Leervorgangs eine Ist-Dauer für einen Leervorgang erfasst und mit einer Soll-Dauer für den Leervorgang verglichen, wobei durch eine Abweichung der Ist-Dauer von der Soll-Dauer für den Leervorgang eine Störung des Kondensatableiters 1 bestimmt ist. Insbesondere liegt dabei eine Verjüngung von Leitungsquerschnitten, beispielsweise durch Ablagerungen vor, wenn die Ist-Dauer höher ist als die Soll-Dauer des Leervorgangs.

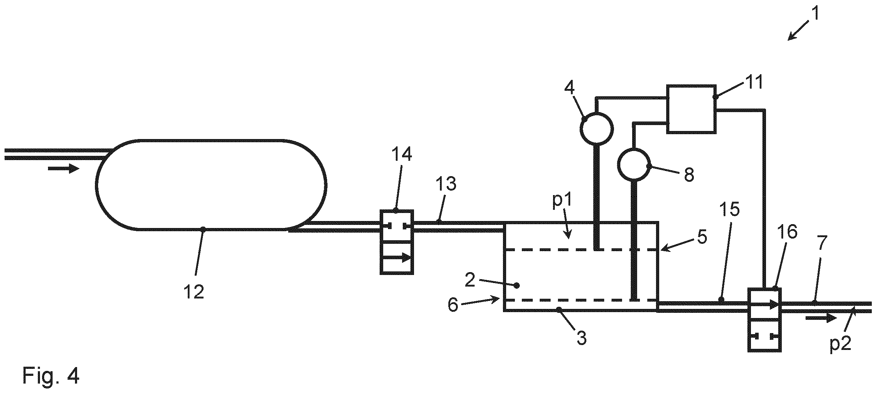

Dies trifft damit auch auf die Ausgestaltung des Kondensatableiters 1 der Figur 4 zu, bei welcher der Kondensatableiter 1 ebenfalls zwei Messaufnehmer 4, 8 aufweist. Hierbei liegt in der Ausführungsform jedoch der Zustand vor, dass der Reservoirdruck p1 größer ist als der Ablaufdruck p2, sodass das Kondensat 2 dem Ablauf 7 auch ohne Erhöhung des Drucks über die in den Figuren 1 bis 3 aufgezeigte Dampfleitung 10 zugeführt wird.

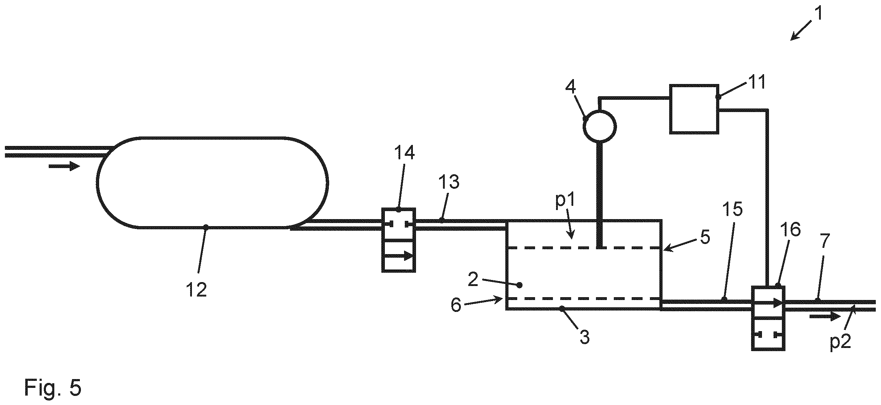

Gleiches ist auf die Ausführungsform des Kondensatableiters 1 der Figur 5 zutreffend, bei welcher der Reservoirdruck p1 ebenfalls größer ist als der Ablaufdruck p2, sodass das Kondensat 2 dem Ablauf 7 auch ohne Erhöhung des Drucks über die in den Figuren 1 bis 3 aufgezeigte Dampfleitung 10 zugeführt wird. Der Kondensatableiter 1 weist dabei jedoch wiederum lediglich einen Messaufnehmer 4 zum Definieren und/oder Erfassen des Maximalfüllstands 5 des Kondensats 2 im Kondensatreservoir 3 auf. Das Definieren und/oder Erfassen des Minimalfüllstands 6 des Kondensats 2 im Kondensatreservoir 3 erfolgt somit erneut ausgehend vom Maximalfüllstand 5 zeitgesteuert.

Allen jeweiligen Ausführungsformen des Kondensatableiters 1 der Figuren 1 bis 5 ist es jedoch gemein, dass im Rahmen deren Betriebs während eines jeweiligen Leervorgangs stets eine gleiche Menge, hier das gleiche Volumen an Kondensat 2 zwischen dem Maximalfüllstand 5 und dem Minimalfüllstand 6 des Kondensats 2 im Kondensatreservoir 3 abgeführt wird. Aus dem Volumen des während eines Leervorgangs abgeführten Kondensats 2 wird mittels einer insbesondere ermittelten, temperaturabhängigen Dichte des Kondensats 2 die Masse dieses Kondensats 2 ermittelt. Darüber hinaus wird während des Betriebs die Anzahl an Leervorgängen des Kondensatreservoirs 3 erfasst, sodass die über den Kondensatableiter 1 abgeführte Masse an Dampf durch eine Summe der in einem jeweiligen Leervorgang abgeführten Masse an Kondensat 2 bestimmt wird. Dies stellt dabei ein Maß für einen Energieverlust des in Figur 1 aufgezeigten Dampfverbrauchers 17 dar. Zur Bestimmung der Anzahl an Leervorgängen des Kondensatreservoirs 3 sowie zur Bestimmung der über den Kondensatableiter 1 abgeführten Masse an Dampf weist der jeweilige Kondensatableiter 1 die Auswerteeinheit 11 auf. Diese ist zudem auch zur Bestimmung der Ist-Dauer eines Leervorgangs des Kondensatreservoirs 3 und dem Vergleich der Ist-Dauer mit der Soll-Dauer des Leervorgangs eingerichtet.

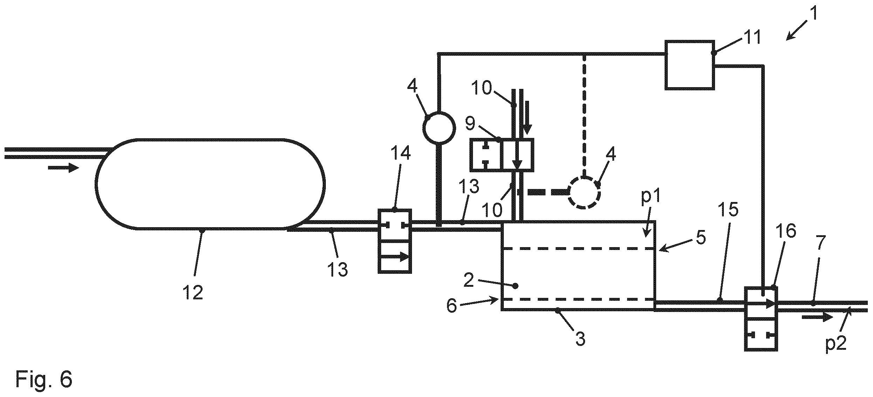

Aus den Figuren 6 bis 8 gehen weitere Ausgestaltungen eines erfindungsgemäßen Kondensatableiters 1 hervor, wobei sich jedoch die Anordnung des - ersten - Messaufnehmers 4 von der Anordnung der vorhergehenden Ausgestaltungen unterscheidet.

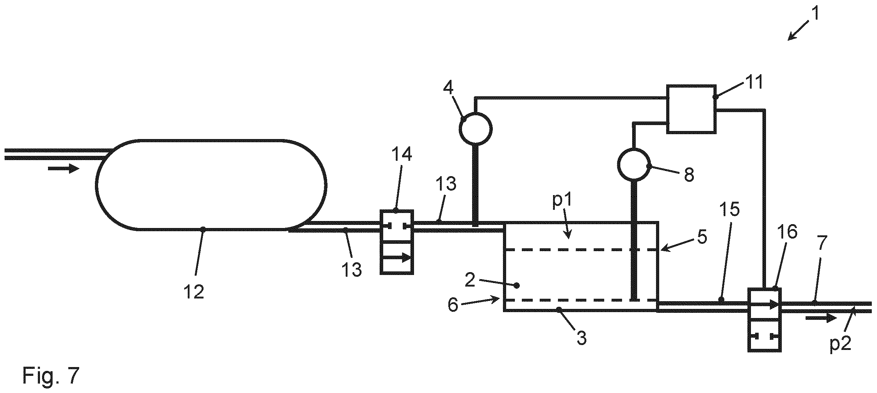

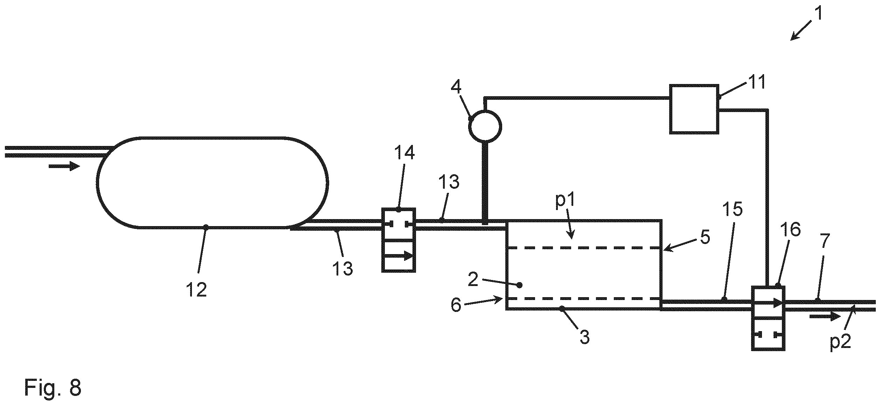

Es sei zunächst jedoch angemerkt, dass der - erste - Messaufnehmer 4 sowie der in der Figur 7 aufgezeigte weitere,- zweite - Messaufnehmer 8 grundsätzlich in dem Gesamtvolumen angeordnet sein können, welches das Kondensatreservoir 3 und/oder außerhalb des Kondensatreservoirs 3 liegende und hierbei stromauf oder stromab an das Kondensatreservoir 3 unmittelbar angrenzende und/oder mit dem Kondensatreservoir 3 verbundene, wenigstens abschnittsweise umgrenzte Volumen umfasst. Diese angrenzenden Volumen sind hierbei in den Ausgestaltungen der Figuren 6 bis 8 die Zuleitungen und die Ableitung des Kondensatreservoirs 3, d. h. die Kondensatzuleitung 13 und/oder die Dampfzuleitung 10 sowie die Kondensatableitung 15, wobei diese jeweils das Kondensatzulaufventil 14, das Dampfventil 9 und das Kondensatablaufventil 16 umfassen. Das sich nunmehr ergebende Gesamtvolumen ist in den Ausgestaltungen der Figuren 7 und 8 durch das Kondensatzulaufventil 14 sowie das Kondensatablaufventil 16 und in der Ausgestaltung der Figur 6 durch das Kondensatzulaufventil 14, das Dampfventil 9 sowie das Kondensatablaufventil 16 abgegrenzt.

In den Ausgestaltungen der Figuren 6 bis 8 ist der - erste - Messaufnehmer 4 nunmehr jedoch nicht innerhalb, auch nicht zumindest teilweise innerhalb des Kondensatreservoirs 3 angeordnet, sondern zumindest teilweise in einem der außerhalb des Kondensatreservoirs 3 liegenden und stromauf unmittelbar an das Kondensatreservoir 3 angrenzenden sowie mit dem Kondensatreservoir 3 verbundenen, wenigstens abschnittsweise umgrenzten Volumen angeordnet. Im Speziellen ist den Figuren 6 bis 8 zu entnehmen, dass der - erste - Messaufnehmer 4 zumindest teilweise in der stromauf des Kondensatreservoirs 3 angeordneten und mit dem Kondensatreservoir 3 verbundenen und unmittelbar an das Kondensatreservoir angrenzenden Kondensatzuleitung 13 angeordnet ist. Die Figur 6 offenbart zudem noch eine weitere Möglichkeit der Anordnung des - ersten - Messaufnehmers 4. Hierbei ist der - erste - Messaufnehmer 4 sowie dessen Verbindung zur Auswerteeinheit 11 in gestrichelter Form dargestellt, wobei der - erste - Messaufnehmer 4 hierbei zumindest teilweise in der Dampfzuleitung 10 angeordnet ist, welche, unmittelbar an das Kondensatreservoir 3 angrenzend, stromauf des Kondensatreservoirs 3 angeordnet und mit dem Kondensatreservoir 3 verbunden ist.

Dadurch, dass das Gesamtvolumen, in welchem die - ersten - Messaufnehmer 4 jeweils angeordnet sind, in den Ausgestaltungen der Figuren 7 und 8 durch das Kondensatzulaufventil 14 sowie das Kondensatablaufventil 16 und in der Ausgestaltung der Figur 6 durch das Kondensatzulaufventil 14, das Dampfventil 9 sowie das Kondensatablaufventil 16 abgegrenzt sind, sind die jeweiligen Messaufnehmer 4 im Speziellen gar zumindest teilweise in dem Abschnitt der Kondensatzuleitung 13 oder der Dampfleitung 9 angeordnet, welcher zwischen dem Kondensatzulaufventil 14 oder dem Dampfventil 9, hierbei demnach stromab des Kondensatzulaufventils 14 oder des Dampfventils 9, und dem Kondensatreservoir 3 ausgeführt ist.

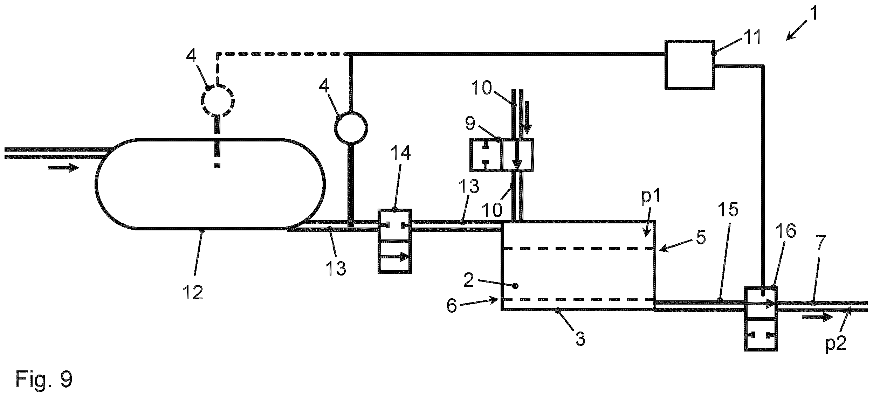

Der Figur 9 ist darüber hinaus eine weitere Ausgestaltung des Kondensatableiters 1 zu entnehmen, wobei sich wiederum die Anordnung des - ersten - Messaufnehmers 4 insbesondere von den Ausführungen der Figuren 6 bis 8 unterscheidet. Zwar ist der - erste - Messaufnehmer 4 wiederum teilweise in einem stromauf an das Kondensatreservoir 3 angrenzenden Volumen, hier der das Kondensatventil 14 umfassenden Kondensatzuleitung 13 angeordnet, diese ist jedoch ebenso ein insbesondere unmittelbar an den Kondensatpuffer 12 angrenzendes und mit dem Kondensatpuffer 12 verbundenes, wenigstens abschnittsweise umgrenztes Volumen. Im Speziellen lässt sich dabei ausführen, dass der - erste - Messaufnehmer 4 aufgrund des Abgrenzens des Gesamtvolumens durch das Kondensatzulaufventil 14, das Dampfventil 9 sowie das Kondensatablaufventil 16, nicht in diesem Gesamtvolumen angeordnet ist. Hingegen ist der - erste - Messaufnehmer 4 in dem Abschnitt des an den Kondensatpuffer 12 angrenzenden und mit dem Kondensatpuffer verbundenen, wenigstens abschnittsweise umgrenzten Volumen angeordnet, welches zwischen dem Kondensatpuffer 12 und dem Kondensatzulaufventil 14, d. h. stromauf des Kondensatzulaufventils 14, ausgeführt ist. Dieser Abschnitt ist hierbei entsprechend der zwischen dem Kondensatpuffer 12 und dem Kondensatzulaufventil 14 ausgeführte Abschnitt der Kondensatzuleitung 13.

Die Figur 9 gibt darüber hinaus noch eine weitere Möglichkeit der Anordnung des - ersten - Messaufnehmers 4 wieder, wobei diese Möglichkeit in gestrichelter Form dargestellt ist. Hierbei ist der Messaufnehmer 4 zumindest teilweise in dem, in dieser Ausführung als ein Tank ausgebildeten Kondensatpuffer 12 des Kondensatableiters 1 angeordnet.

**BEZUGSZEICHENLISTE**

| | | | |
|---|---|---|---|
| 1 | Kondensatableiter | 16 | Kondensatablaufventil |
| 2 | Kondensat | 17 | Dampfverbraucher |
| 3 | Kondensatreservoir | 18 | Kondensathauptleitung |
| 4 | Messaufnehmer | p1 | Reservoirdruck |
| 5 | Maximalfüllstand | p2 | Ablaufdruck |
| 6 | Minimalfüllstand | p3 | Hauptleitungsdruck |
| 7 | Ablauf | | |
| 8 | Messaufnehmer | | |
| 9 | Dampfventil | | |
| 10 | Dampfleitung | | |
| 11 | Auswerteeinheit | | |
| 12 | Kondensatpuffer | | |
| 13 | Kondensatzuleitung | | |
| 14 | Kondensatzulaufventil | | |
| 15 | Kondensatableitung | | |

## Patentansprüche

1. Verfahren zum Betrieb eines Kondensatableiters (1), wobei ein Füllstand eines Kondensats (2), welches in einem Kondensatreservoir (3) des Kondensatableiters (1) angesammelt ist und/oder sich ansammelt überwacht und das Kondensat (2) bei Erreichen eines über einen Messaufnehmer (4) definierten und/oder erfassten Maximalfüllstands (5) des Kondensats (2) im Kondensatreservoir (3) in einem Leervorgang des Kondensatreservoirs (3) respektive in einem Zuführvorgang einem Ablauf (7) des Kondensatableiters (1) zugeführt wird, **dadurch gekennzeichnet, dass** während eines jeweiligen Leervorgangs stets eine gleiche Menge an Kondensat (2) zwischen dem Maximalfüllstand (5) und einem Minimalfüllstand (6) des Kondensats (2) im Kondensatreservoir (3) abgeführt wird.

2. Verfahren nach Anspruch 1, **dadurch gekennzeichnet, dass** eine Anzahl an Leervorgängen des Kondensatreservoirs (3) erfasst wird.

3. Verfahren nach Anspruch 1 oder 2, **dadurch gekennzeichnet, dass** die abgeführte Menge das Volumen des Kondensats (2) ist und über dieses Volumen und/oder zumindest eine die Dichte des Kondensats (2) beeinflussende, erfasste Temperatur des Kondensats (2) eine Masse des abgeführten Kondensats (2) bestimmt wird.

4. Verfahren nach zumindest einem der vorhergehenden Ansprüche, **dadurch gekennzeichnet, dass** eine über den Kondensatableiter (1) abgeführte Masse an Dampf durch eine Summe der in einem jeweiligen Leervorgang abgeführten Masse an Kondensat (2) bestimmt wird.

5. Verfahren nach zumindest einem der vorhergehenden Ansprüche, **dadurch gekennzeichnet, dass** das Definieren und/oder Erfassen des Minimalfüllstands (6) des Kondensats (2) im Kondensatreservoir (3) ausgehend vom Maximalfüllstand (5) zeitgesteuert erfolgt.

6. Verfahren nach zumindest einem der vorhergehenden Ansprüche, **dadurch gekennzeichnet, dass** das Definieren und/oder Erfassen des Minimalfüllstands (6) des Kondensats (2) im Kondensatreservoir (3) über den Messaufnehmer (4) und/oder einen weiteren Messaufnehmer (8) des Kondensatableiters (1) erfolgt.

7. Verfahren nach Anspruch 6, **dadurch gekennzeichnet, dass** eine Ist-Dauer für einen Leervorgang erfasst und mit einer Soll-Dauer für den Leervorgang verglichen wird.

8. Verfahren nach Anspruch 7, **dadurch gekennzeichnet, dass** durch eine Abweichung der Ist-Dauer von der Soll-Dauer für einen Leervorgang eine Störung des Kondensatableiters (1) bestimmt ist.

9. Verfahren nach zumindest einem der vorhergehenden Ansprüche, **dadurch gekennzeichnet, dass** bei einem im Kondensatreservoir (3) vorherrschenden Reservoirdruck (p1), welcher gleich oder geringer ist wie ein im Ablauf (7) des Kondensatableiters (1) vorherrschender Ablaufdruck (p2) und/oder ein in einer mit dem Ablauf (7) verbundenen Kondensathauptleitung (18) vorherrschender Hauptleitungsdruck (p3), der Reservoidruck (p1) durch Aufschalten einer über ein Dampfventil (9) mit dem Kondensatreservoir (3) verbundenen Dampfleitung (10) über den Ablaufdruck (p2) und/oder den Hauptleitungsdruck (p3) erhöht wird.

10. Verfahren nach zumindest einem der vorhergehenden Ansprüche, **dadurch gekennzeichnet, dass** das Definieren und/oder Erfassen des Maximalfüllstands (5) und/oder Minimalfüllstands (6) des Kondensats (2) im Kondensatreservoir (3) über ein Messen in zumindest einem außerhalb des Kondensatreservoirs (3) liegenden und/oder, an das Kondensatreservoir (3) angrenzenden, wenigstens abschnittsweise umgrenzten Volumen des Kondensatableiters (1) erfolgt.

11. Kondensatableiter (1) zur Durchführung des Verfahrens nach zumindest einem der vorhergehenden Ansprüche, wobei der Kondensatableiter (1) ein Kondesatreservoir (3) zur Aufnahme von Kondensat (2) und einen Messaufnehmer (4) zum Definieren und/oder Erfassen eines Maximalfüllstands (5) des Kondensats (2) im Kondensatreservoir (3) aufweist, **dadurch gekennzeichnet, dass** der Kondensatableiter (1) eine Auswerteeinheit (11) aufweist, welche zur Bestimmung der Anzahl an Leervorgängen des Kondensatreservoirs (3) eingerichtet ist.

12. Kondensatableiter (1) nach Anspruch 11, **dadurch gekennzeichnet, dass** die Auswerteeinheit (11) zur Bestimmung einer Ist-Dauer eines Leervorgangs des Kondensatreservoirs (3) und/oder dem Vergleich der Ist-Dauer mit einer Soll-Dauer des Leervorgangs eingerichtet ist.

13. Kondensatableiter (1) nach Anspruch 11 oder 12, **dadurch gekennzeichnet, dass** die Auswerteeinheit (11) zur Bestimmung der über den Kondensatableiter (1) abgeführten Masse an Dampf eingerichtet ist, indem die Masse an abgeführtem Kondensat (2) bestimmt und über die Anzahl an durchgeführten Leervorgängen aufsummiert wird.

14. Kondensatableiter (1) nach zumindest einem der Ansprüche 11 bis 13, **dadurch gekennzeichnet, dass** der Messaufnehmer (4) und/oder ein weiterer Messaufnehmer (8) zumindest teilweise in einem außerhalb des Kondensatreservoirs (3) liegenden und/oder an das Kondensatreservoir (3) angrenzenden, wenigstens abschnittsweise umgrenzten Volumen des Kondensatableiters (1), angeordnet ist.

15. Kondensatableiter (1) nach zumindest einem der Ansprüche 11 bis 14, **dadurch gekennzeichnet, dass** der Messaufnehmer (4) zumindest teilweise in einer Kondensatzuleitung (13) des Kondensatreservoirs (3) angeordnet ist.

16. Kondensatableiter (1) nach zumindest einem der Ansprüche 11 bis 15, **dadurch gekennzeichnet, dass** der Messaufnehmer (4) zumindest teilweise in einem Kondensatpuffer (12) des Kondensatableiters (1) und/oder einem an den Kondensatpuffer (12), insbesondere unmittelbar, angrenzenden und/oder mit dem Kondensatpuffer (12) verbundenen wenigstens abschnittsweise umgrenzten Volumen des Kondensatableiters (1), angeordnet ist.
